# EUROPEAN PATENT SPECIFICATION

(11) **EP 3 668 129 B1**
(45) Date of publication and mention of the grant of the patent: **14.07.2021**
(21) Application number: 19175345.8
(22) Date of filing: 20.05.2019
(51) Int. Cl.: H04W 36/08, H04W 88/04, H04W 4/40, H04W 84/00, H04L 29/08, H04W 4/42, H04W 4/44, H04W 4/02

(54) **METHOD AND SYSTEM FOR DETERMINING THE LOCATION OF A VEHICLE IN A CELLULAR NETWORK**
VERFAHREN UND SYSTEM ZUM BESTIMMEN DER POSITION EINES FAHRZEUGS IN EINEM ZELLULAREN NETZWERK
PROCÉDÉ ET SYSTÈME PERMETTANT DE DÉTERMINER L'EMPLACEMENT D'UN VÉHICULE DANS UN RÉSEAU CELLULAIRE

(30) Priority: 13.12.2018 EP 18212266
(43) Date of publication of application: 17.06.2020
(73) Proprietor: KONTRON TRANSPORTATION FRANCE SAS, 78066 St Quentin Yvelines Cedex (FR)
(72) Inventor: TANE, Pierre, 91200 Boulogne-Billancourt (FR); JACQUES, Roger, 78320 Lévis Saint Nom (FR); BOTET, Gil, 78180 Montigny-le-Bretonneux (FR); GRUET, Christophe, 78180 Montigny le Bretonneux (FR)
(74) Representative: Weiser & Voith Patentanwälte Partnerschaft

(56) References cited:
- US-A1- 2014 233 412
- US-A1- 2018 049 110
- US-B2- 8 150 417
- ZTE: "Considerations on eNB type RSU and UE type RSU", 3GPP DRAFT; R2-161163 CONSIDERATIONS ON ENB TYPE RSU AND UE TYPE RSU, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; F , vol. RAN WG2, no. St. Julian's, Malta; 20160215 - 20160219 14 February 2016 (2016-02-14), XP051055147, Retrieved from the Internet: URL:http://www.3gpp.org/ftp/Meetings_3GPP_ SYNC/RAN2/Docs/ [retrieved on 2016-02-14]

## Description

The present invention relates to a method and a system for determining the location of a vehicle, in particular a train on a track, within a cellular mobile phone network.

In traditional cellular networks such as 3G and 4G networks according to the 3GPP (3^{rd} Generation Partnership Program) standard different techniques have been devised to locate a moving object in the network. Conventionally, the moving object, e.g., a vehicle, is equipped with a mobile station ("user equipment") which calculates its position by measuring the time-of-flight of downlink communications received from different base stations in the vicinity, each base station serving a cell of the cellular network. For example, the "Timing Advance" (TA) parameter defined in 2G, 3G, 4G and 5G cellular networks is a measure of the time-of-flight of a wireless communication between a mobile station and its serving base station and is available at the base station and the mobile station (2G, 4G, 5G) or only at the base station (3G). The timing advance is the round trip time (RTT) from mobile station to base station and back. From the known equivalency of distance (d) = speed of light (c) * time-of-flight (TA/2), the distances of a mobile station to its nearby base stations can be determined. From at least three such distance measurements to geographically dispersed base stations the location of the mobile station in two coordinates (latitude and longitude) can be determined. By increasing the number of base stations to which time-of-flight and hence distance measurements can be made the accuracy of the localisation can be improved.

However, in conventional cellular networks the number of base stations is a cost limiting factor and cannot be increased just for improving localisation. The problem is even more severe in cellular networks with a linear topology such as railways networks where the base stations are distributed one after the other along the railway track. A mobile station mounted on a train is mostly within the communication range of only one base station so that TA localisation does not work and has to be supplemented by conventional GNSS (Global Navigation Satellite System) localisation, e.g., with the help of a GNSS receiver on the train.

US2014/233412A1 disclosesa mobile base station with a core network on a vehicle such as a train, however, this base station is used only to "ad-hoc" set up a micro or additional cell in an existing fixed cellular network to communicate with mobile stations of ordinary users other mobile base stations.

It is therefore an aim of the invention to provide an improved solution for determining the location of a vehicle, in particular a train on a track, within a cellular mobile phone network with reduced costs and improved accuracy of localisation.

In a first aspect of the invention, this problem is solved by a method for determining the location of a vehicle, in particular a train on a track, comprising:
mounting a base station of a cellular mobile phone network and a core network of the mobile phone network onto the vehicle,
mounting at least two mobile stations of the mobile phone network stationarily on the ground at a predetermined distance from each other, wherein the distance between two adjacent mobile stations is less than a half, preferably less than a fourth, of a communication range of the base station,
wherein, for each of at least two mobile stations within said communication range, a measure of time-of-flight of a wireless communication between the base station and said mobile station is determined,
wherein the location of the vehicle is determined based on said measures and the locations of mounting of said at least two mobile stations, and
wherein the determined location is communicated via the core network to a first application on the vehicle and/or via at least one of the mobile stations and an intermediate network, which connects the mobile stations to a second application remote from the vehicle, to said second application.

The inventive solution turns the classical setup of stationary base stations and moveable mobile stations "upside-down" by mounting a whole base station and core network on a vehicle, for example a train, and stationarily mounting a multitude of mobile stations on the ground. As for the communication aspect of the network, this has the effect that no complex handover mechanisms have to be performed when the vehicle is travelling. The base station on the vehicle only has to manage (parallel) connections to different mobile stations, which is less troublesome than handovers from a single mobile station between different base stations. This is due to the fact that a base station can commonly host multiple connections to mobile stations while a mobile station is usually only ever connected to a single base station. As for to the localisation aspect, the low costs of mobile stations in relation to the high costs of a base station allow for distributing a much larger number of stationarily fixed mobile stations on the ground, for example with mutual distances of less than 500 m as compared to conventional base station cell sizes (communication ranges) of, e.g., 5 km. The vehicle with the base station and core network mounted thereon can thus communicate with a much larger number of mobile stations within its communication range, and times-of-flight and hence distances to a large number of geographically dispersed mobile stations can be measured and used for the localisation. Accuracy of the localisation can thus be improved without significant costs or the necessity to change any of the communication standards, just by reversing the setup of mobile stations and base station.

The method of the invention is particularly suited for a deployment in cellular railway networks with linear topology. A large number of low-cost mobile stations distributed along the track can provide both improved communication and location services, without any need to resort to GNSS assisted localisation.

Due to the dense mounting of mobile stations on the ground, the moving base station has always several mobile stations in front of it. For communication, the base station can select the mobile station(s) having the best radio conditions. Contrarily to the classical deployment scheme, for which communication quality of the mobile stations can change between good radio conditions when close to the base station and bad radio conditions at a boundary of the communication range of the base station, in the inventive method always the best mobile station can be selected for communication, yielding a constantly good communication quality. Furthermore, the base station may even connect to multiple mobile stations at once and communicate data to and from each of the connected mobile stations. This has the advantage that multiple communication bearers can be set up for different purposes. For example, the same data could be transferred to the mobile stations to implement MIMO (Multiple-Input and Multiple-Output) communication or variants thereof. Alternatively, different data could be transferred via multiple mobile stations, too.

Preferably, the mobile stations and the base station wirelessly communicate with each other according to a 3GPP (3^{rd} Generation Partnership Project) 4G or 5G standard. Using a 4G or 5G standard has the advantage that base stations (called "eNodeB" in 4G and "gNodeB" in 5G) and mobile stations (called "user equipments", UE, in 4G and 5G) already have well-defined roles within the mobile phone network such that commercially available well-functioning devices can be used for implementing the method of the invention. Alternatively, any other standard could be used for communication, too, for example a 2G or 3G standard.

The measures of time-of-flight, e.g., the Timing Advance (TA) values, can either be determined by the individual stationarily mounted mobile stations and reported to the moving base station or determined by the latter. In a first embodiment of the invention, each mobile station determines its measure of time-of-flight and wirelessly communicates this measure and information about its location of mounting to the base station. In an alternative second embodiment of the invention, each mobile station wirelessly communicates information about its location of mounting to the base station, and the base station determines the measures of time-of-flight for all of said at least two mobile stations.

When there are more than two, preferably more than three, mobile stations within the communication range of the base station, in a further preferred embodiment the measure and location information of at least one mobile station farthest from the base station is disregarded when determining its location. By this means, accuracy of the localisation can be further improved: The accuracy of time-of-flight measures of mobile stations closer to the base station is usually higher than those of mobile stations farther from the base station. By considering only the N closest mobile stations from M mobile stations (N < M) within the communication range the accuracy of localisation is increased.

The inventive setup of mobile stations fixed on the ground and a base station and core network attached to the moving vehicle can also be used for providing the moving vehicle with local information along its way. To this end, in a preferred embodiment of the invention at least one of the mobile stations receives sensor information from a sensor connected thereto and wirelessly communicates said sensor information to the base station. In particular, when the vehicle is a train on a track and the mobile stations are stationarily mounted along the track, the sensor may sense a status of a railway switch or railway crossing along the track. In this way the train can receive critical messages about railway-specific objects, such as switches and crosses, along its track. Due to the low costs of mobile stations, e.g., each individual railway switch or crossing along the track can be equipped with a mobile station and a sensor informing the train about its status. The train can thus receive highly localized information with fine granularity.

In a second aspect, the invention provides a system for determining the location of a vehicle, in particular a train on a track, comprising:
a base station of a cellular mobile phone network and a core network of the mobile phone network mounted on the vehicle,
at least two mobile stations of the mobile phone network mounted stationarily on the ground at a predetermined distance from each other, wherein the distance between two adjacent mobile stations is less than a half, preferably less than a fourth, of a communication range of the base station,
a location server connected to the base station, which location server has, for each of at least two mobile stations within said communication range, a measure of time-of-flight of a wireless communication between the base station and said mobile station,
wherein the location server is configured to determine the location of the vehicle based on said measures and on information about the locations of mounting of said at least two mobile stations, and
wherein the location server is configured to communicate the determined location via the core network to a first application on the vehicle and/or via at least one of the mobile stations and an intermediate network, which connects the mobile stations to a second application remote from the vehicle, to said second application.

For the inventive system, the same embodiments can be employed as described above for the inventive method. Furthermore, all of the advantages as detailed above for the method also hold for the inventive system.

The invention shall now be explained in more detail below on the basis of preferred exemplary embodiments thereof with reference to the accompanying drawings, in which:
Fig. 1 shows the inventive system in a schematic view, wherein communication is performed between a base station located on a train and stationary mobile stations;
Fig. 2 shows components of the inventive system in a schematic block diagram;
Fig. 3 shows a variant of the inventive system of Fig. 1 in a schematic view;
Fig. 4 shows the localisation of the train within the inventive systems of Figs. 1 to 3; and
Fig. 5 shows a further variant of the inventive system for collecting local information from sensors connected to the stationary mobile stations.

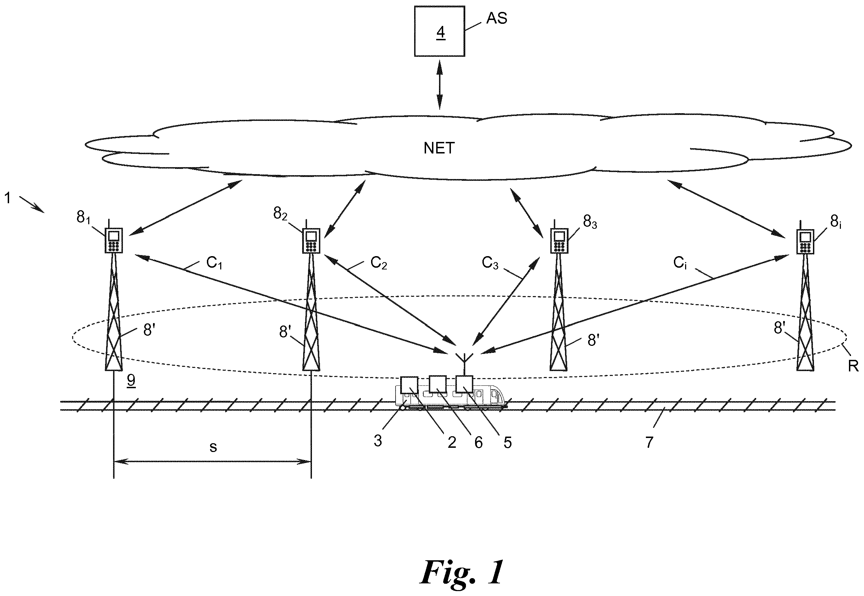

Fig. 1 shows a system 1, in which communication is performed between a first application 2 on a train 3 and a second application 4 remote from the train 3. Remote from the train 3 means in this context that the second application 4 is not present on the train 3 but resides, for example, on a stationary computer, a computer carried by a different vehicle, or on a mobile phone that is physically independent of the train 3, e.g., carried by a user riding said train 3.

Alternatively, instead of the first application 2 being on the train 3, the first application 2 could also be on a different vehicle, for example a car, truck, ship, drone, or there like.

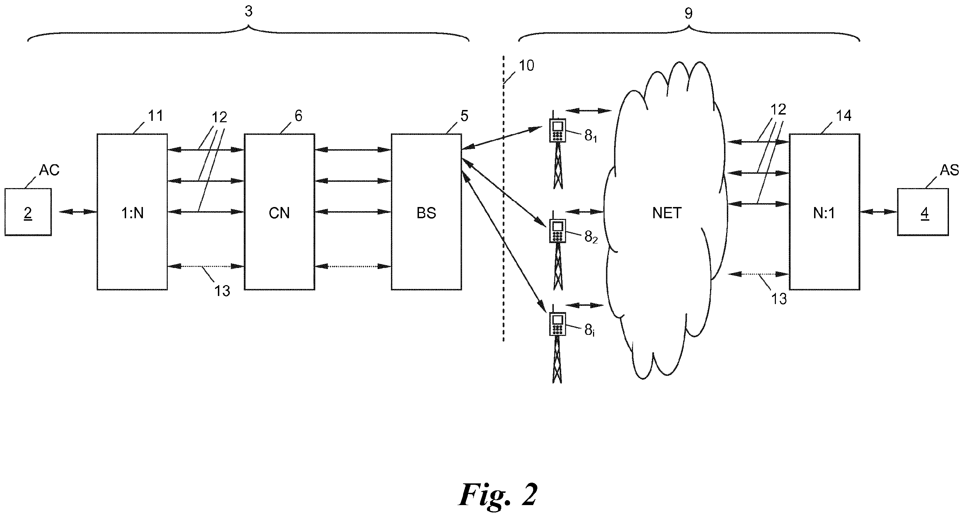

The first application 2 is in many embodiments hosted on an application client AC (Fig. 2), e.g., on a computer. The first application 2 could send and receive data packets of various kinds, e.g., IP data packets of a data or Voice-over-IP connection, or be a source or target of a line-switched call, e.g., a voice, SMS, or fax connection. The second application 4 is usually hosted on an application server AS or a different application client AC and can also send and receive packet-switched connections or terminate calls of line-switched connections, as described above.

Unlike in a classical cellular mobile phone network, a base station 5 of a cellular mobile phone network and a core network 6 of the cellular mobile phone network are mounted onto the train 3 instead of a mobile station. The base station 5 has a communication range R such that the communication range R moves together with the train 3 when it moves along a track 7.

The base station 5 mounted on the train can be a base station as usually used in mobile phone networks or can be specially adapted for the purpose of being mounted onto the train 3, e.g., stripped of parts unnecessary for this purpose. The core network 6 can even be reduced in such a way that all its necessary functions are incorporated into a single computer. The application client AC and the core network 6 could even be embodied by the same computer.

Along the track 7, at least two mobile stations 8ᵢ, i = 1, 2, 3, ..., of the mobile phone network are stationarily mounted, for example by means of a support 8' or gantry, on the ground 9. The stationary mobile stations 8ᵢ are in turn connected to the second application 4, either wirelessly or wire-bound.

In order to communicate between the first application 2 and the second application 4, data is communicated between the first application 2 and the base station 5 via the core network 6 on the train 3.

The base station 5 on the train 3 and at least one of the mobile stations 8ᵢ on the ground 9 communicate data wirelessly between them, see wireless communications C₁, C₂, ..., generally Cᵢ. This can be done according to any mobile communication standard known in the art, for example any of the 3GPP (3^{rd} Generation Partnership Project) 3G, 4G, or 5G standards. This means that the base station 5 and the mobile station 8ᵢ use a specific communication channel, e.g., over a predefined frequency range for communication. If communication is performed according to a 4G standard, for example LTE release 8 specified by 3GPP, the base station 5 is called eNodeB and the mobile stations 8ᵢ are called user equipments. If a 5G standard is used, for example as defined in IMT-2020 by ITU (International Telecommunication Union) or 5G NR specified by 3GPP (3^{rd} Generation Partnership Project), the base station 5 is called gNodeB and the mobile stations 8ᵢ are called user equipments.

Lastly, data is communicated between the at least one mobile station 8ᵢ on the ground 9 and the second application 4, e.g., via an intermediate network NET. Thereby, communication can be achieved between the first application 2 on the train 3 and the second application 4 remote from the train 3.

When communicating, data can be transferred in an uplink direction (from the first application 2 to the second application 4) or in a downlink direction (from the second application 4 to the first application 2). For uplink and downlink, different communication channels, e.g., different frequency bands and/or time slots, can be utilized.

As can be seen from Fig. 1, since the communication range R is defined by the base station 5 travelling with the vehicle, the communication channel used for wirelessly communicating between the base station 5 and mobile stations 8ᵢ is only occupied within the communication range R. This is due to the fact that only the base station 5 broadcasts channel control information while the mobile stations 8ᵢ, in idle mode, only monitor the wireless channel in order to detect the presence of a close by base station 5. It can thus be seen that outside of the communication range R, a different train 3 could travel while carrying a different base station 5 and use the same communication channel independently, even with a different communication standard.

As soon as two trains 3 come near each other, however, communication has to be coordinated. To this end, the mobile stations 8ᵢ can detect that multiple base stations 5 are approaching and provide this information to the base stations 5. Each base station 5 can then decide to only use a predetermined subset of the communication channel. For example, one of the base stations 5 uses the first half of a frequency range of the communication channel and the other base station 5 uses the second half of the frequency range of the communication channel. This is especially useful if wireless communication is performed by means of a 4G or 5G standard because channel resources are orthogonal such that the division of the communication channel can be done through frequency (by means of resource block management) or time (by means of subframe management). For example, when two trains 3 travel in opposite directions, the base stations 5 can be configured to manage their uplink and downlink communications by considering a resource block ranking from 1 to (K/2) and (K/2)+1 to K, respectively, K being the total number of resource blocks available. When two trains 3 are travelling in the same direction, the restriction rules could refer to subframe number. It can be seen that by means of this, a flexible separation of the frequency channel is achieved.

The different mobile stations 8ᵢ are each mounted with a predetermined distance s from each other which may be less than a half or less than a fourth of the communication range R of the base station 5. If the predetermined distance s is half of the communication range R, this effectively means that the density of stationary mobile stations 8ᵢ is double than the density of stationary base stations 5 in a classical mobile phone network. This increased density can be achieved because firstly mobile stations 8ᵢ are cheaper than base stations 5 and secondly because the base station 5 can always connect to multiple mobile stations 8ᵢ at the same time and no handover has to be performed in such cases, i.e., a higher density of base stations 5 would just lead to more handovers.

Communication when the base station 5 is connected to multiple mobile stations 8ᵢ at once is now explained with reference to Fig. 2. The wireless interface between the base station 5 and the mobile stations 8ᵢ is shown by numeral 10. Devices mounted on the train 3 are depicted to the left of interface 10 and devices located at a location remote from the train 3, such as the ground 9, are depicted to the right of interface 10.

It can be seen that the base station 5 is connected to three mobile stations 8ᵢ. More generally, the base station 5 could be connected to at least two mobile stations 8ᵢ. Each of the connections between the base station 5 and the mobile stations 8ᵢ usually has a different quality of service (QoS). This means that the base station 5 could in principle select the mobile station 8ᵢ with the best quality of service.

In some embodiments, it can however be advantageous to establish a communication bearer over each of the mobile stations 8ᵢ, for example to enable a MIMO (Multiple-Input and Multiple-Output), SIMO (Singe-Input and Multiple-Output), or MISO (Multiple-Input and Singe-Output) communication. In the simplest variant, the first application 2 itself could establish individual communication bearers by selecting the corresponding mobile stations 8ᵢ.

Alternatively, a 1:N-connectivity gateway 11 could be mounted on the train 3. This gateway 11 is connected to the first application 2 and the core network 6, acts as a default gateway for the first application 1, and manages the 1:N-connectivity translation between the first application 1 and the core network 6 mounted on the train 3. To achieve this, the gateway 11 establishes a 1:N-multipath connection between the first application 2 and the core network 6, N being the number of mobile stations 8ᵢ connected to the base station 5.

The gateway 11 can then either choose to establish independent unicast bearers for each of the connected mobile stations 8ᵢ (denoted by communication paths 12) or to establish a single multicast bearer (communication path 13). If the gateway 11 establishes a multicast bearer, the base station 5 will then communicate the multicast message to each of the connected mobile stations 8ᵢ. This is for example achieved by using an LTE standard that supports evolved multimedia broadcast multicast services (eMBMS).

An N:1-connectivity gateway 14 can furthermore be mounted on the ground 9 or at a remote location, for example at the location of the second application 4. The gateway 14 is on the one hand connected to the mobile stations 8ᵢ, for example via the intermediate network NET, and on the other hand to the second application 4. Similarly to the 1:N-connectivity gateway 11, the N:1-connectivity gateway 14 can establish an N:1-multipath connection between the mobile stations 8ᵢ and the second application 4. This can be done by establishing multiple unicast bearers 12 or a single multicast bearer 13.

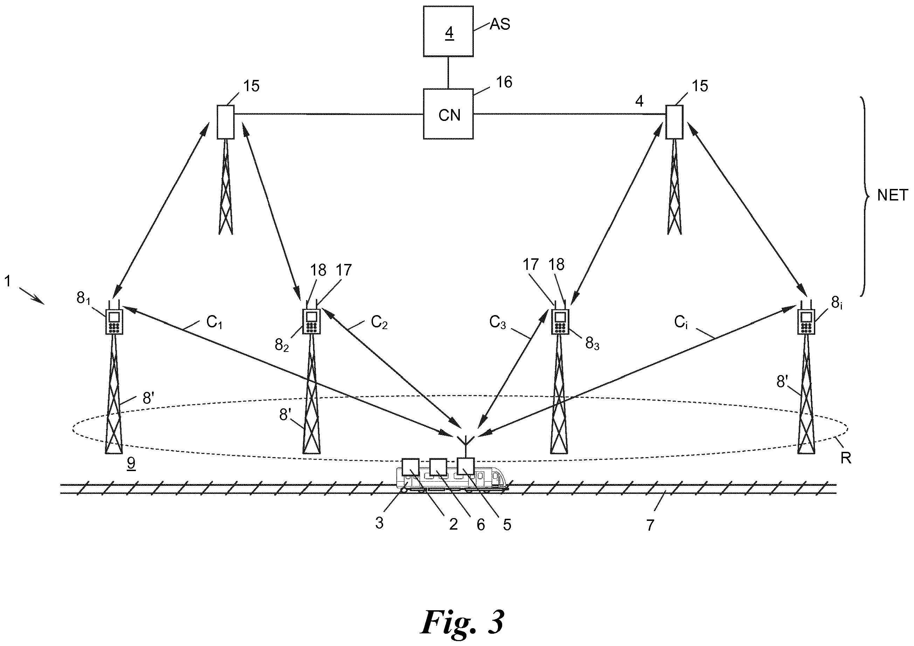

Fig. 3 shows one possible embodiment of the intermediate network NET. Here, the intermediate network NET comprises at least one stationary base station 15, for example one stationary base station 15 for each set of four stationary mobile stations 8ᵢ. The intermediate network NET can for example be a regular cellular mobile phone network according to the classical setup. Each stationary base station 15 is in turn connected to the second application 4, for example via a core network 16. The mobile stations 8ᵢ and the stationary base station 15 communicate wirelessly according to any radio communication standard known in the art, either in the same frequency band as the communication of mobile stations 8ᵢ and the moveable base station 5 is performed or in another frequency band.

For example, the mobile stations 8ᵢ could perform dual connectivity communications, i.e., communicate with the moveable base station 5 on the vehicle 3 and at the same time with the stationary base station 15 on the ground 9. Such dual connectivity communications are supported by 4G and 5G, for example. For these purposes, each stationary mobile station 8ᵢ could be equipped with two sets of antennas 17, 18, wherein one antenna 17 is directed towards the track 7, for example with a beam width of 90° (for example a dual beam antenna or two antennas with a splitter), and the other antenna 18 is directed towards the stationary base station 15 with a high directivity.

For using dual connectivity communications, in one practical embodiment dual registration is employed such that the stationary mobile stations 8ᵢ connect to the mobile base station 5 with a 4G standard and to the stationary base station 5 with a 5G standard or vice versa.

Alternatively, if dual connectivity communications are not supported by the mobile station 8ᵢ, each mobile station 8ᵢ could have a second mobile station (not shown) connected thereto, for example wired thereto, such that the mobile station 8ᵢ communicates with the stationary base station 15 via the second mobile station.

If communication between the stationary base station 15 and the mobile stations 8ᵢ is performed according to 5G, the stationary base station 15 can employ beamforming schemes such that it has one beam directed at each mobile station 8ᵢ. By means of this, full advantage can be taken of the features supported by 5G to increase the throughput of the system.

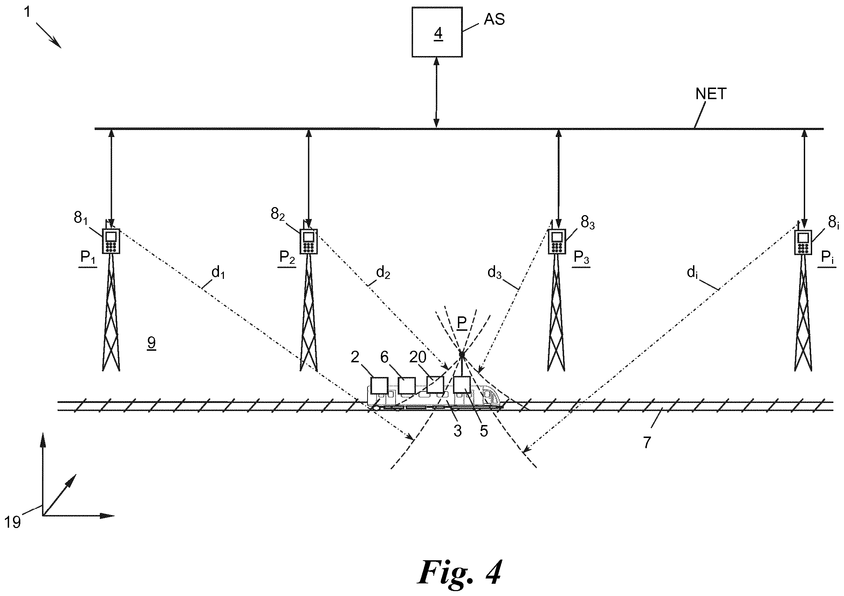

Fig. 4 shows the concept of localising a vehicle, here the train 3, by means of the systems 1 of Figs. 1 to 3. For each mobile station 8ᵢ its individual location of mounting Pᵢ in a reference coordinate system 19 is known and, e.g., stored in the respective mobile station 8ᵢ and/or in a location server 20 connected to the base station 5. The location server 20 may alternatively be part of the core network 6, e.g., within a gateway of the core network 6 to the base station 5, or be a part of the application client AC or the application 2.

The mounting locations Pᵢ can be predetermined when installing the mobile stations 8ᵢ. Optionally, each mobile station 8ᵢ can measure its mounting location Pᵢ by, e.g., a GNSS receiver in the mobile station 8ᵢ or by conventional localisation techniques such as an OTDOA (Observed Time Difference of Arrival) service available in the intermediate network NET, when this is in the form of a regular cellular mobile phone network with a classical setup as depicted for the network NET of Fig. 3.

If the mounting locations Pᵢ of the mobile stations 8ᵢ are not yet known to any of the components location server 20, core network 6, application client AC, and application 2 on the train 3, the mobile stations 8ᵢ wirelessly communicate information about their locations Pᵢ to the base station 5 when they are in the communication range R. The location information can be included in one or more of the wireless communications Cᵢ used for communication between the application 4 and the application 2 or in a separate communication Cᵢ dedicated just for this purpose.

Furthermore, for each mobile station 8ᵢ currently within the communication range R of the base station 5, a measure of the time-of-flight of a wireless communication Cᵢ between the base station 5 and that mobile station 8ᵢ is determined. This measure may, e.g., be the Timing Advance (TA) value according to the 2G, 3G, 4G or 5G standard, which is determined and updated for any mobile station 8ᵢ served by a base station 5 within its communication range R and available in 2G, 4G and 5G systems both at the base station 5 and the respective mobile station 8ᵢ and in 3G systems only at the base station 5. The time-of-flight measure TAᵢ of the respective mobile station 8ᵢ can, e.g., be determined as the half of the round trip time (RTT) of a data packet sent from the mobile station 8ᵢ to the base station 5 and back (or vice versa).

If the measure TAᵢ is determined individually by each mobile station 8ᵢ, it will be reported by the respective mobile station 8ᵢ periodically to the base station 5 via the wireless communications Cᵢ, for example together with the location Pᵢ.

From each time-of-flight measure TAᵢ the distance dᵢ of the respective mobile station 8ᵢ to the base station 5 can be determined according to dᵢ = c * TAᵢ (c being the speed of light). And from all distances dᵢ determined and the known locations Pᵢ of the mobile stations 8ᵢ the location P of the base station 5 can be determined as geometric intersection of circles with the radii dᵢ and the centres Pᵢ, as shown in Fig. 4. This determination can be done in the base station 5, the location server 20, the core network 6, the application client AC and/or the application 2, but preferably in the location server 20. From repeated determinations of the position P the speed of the train 3 can be calculated.

The determined location P and/or speed of the vehicle 3 can be passed on from the location server 20 via the core network 6 to the first application 2 on the application client AC and/or - via the network of mobile stations 8ᵢ and the intermediate network NET - to the second application 4 on the remote application server AS.

The more mobile stations 8ᵢ are within the communication range R of the base station 5 at the same time, the more time-of-flight measures TAᵢ and hence distances dᵢ and locations Pᵢ can be considered when determining the intersection as the location P of the train 3, improving the accuracy of the determination. Choosing a mutual distance s between each two adjacent mobile stations 8ᵢ of less than a half of the communication range R (here: the length of the communication range R in the direction of the track 7 along which the mobile stations 8ᵢ are distributed) ensures that always at least two mobile station 8ᵢ are within the communication range R when the train 3 rides along the track 7. Reducing the mutual distances s further, e.g., to a third or preferably a fourth or less of the communication range R, increases the number of mobile stations 8ᵢ concurrently within the communication range R when the train 3 moves and thus further improves the accuracy of the localisation.

For example, when the communication range R of the base station 5 is several km, the distance s between two adjacent mobile stations 8ᵢ can be less than 1000 m, preferably less than 700 m, particularly preferably less than 500 m.

Alternatively, if the communication range R is several tens of km, the distance s can be in the range of several km, preferably less than 5 km, particularly preferably less than 3 km.

Optionally, when there are three or more mobile stations 8ᵢ within the communication range R, only the N closest mobile stations 8ᵢ among all M (M > N) mobile stations 8ᵢ within the communication range R are considered when calculating the location P from the distances dᵢ and positions Pᵢ. This is based on the insight that the measures TAᵢ or distances dᵢ, respectively, of mobile stations 8ᵢ farther away from the base station 5 are usually less accurate - or at least yields less accurate sections when circles with radii dᵢ are intersected - than those of closer mobile stations 8ᵢ.

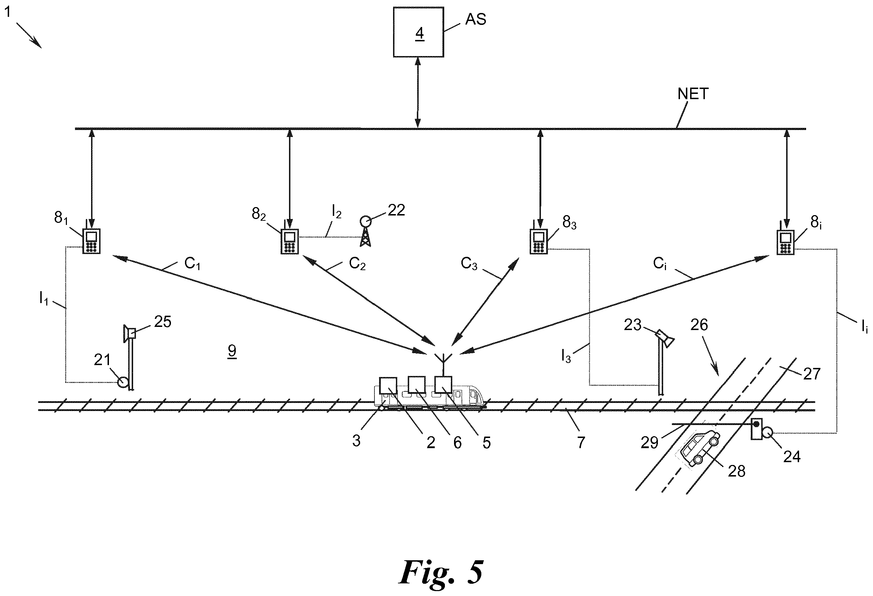

Fig. 5 shows a further application of the systems 1 of Figs. 1 to 4. Here, one or more of the mobile stations 8ᵢ is provided with a sensor 21 - 24 connected thereto. Each sensor 21 - 24 senses the status of an object in the vicinity of the respective mobile station 8ᵢ or of a local environment of the mobile station 8ᵢ. Examples of such sensors include a sensor 21 for sensing the status of a traffic light or railway signal 25, an environmental sensor 22 for sensing environmental parameters such as air temperature, humidity, wind speed, rain or ice, a camera 23 for taking images of a traffic area, e.g., a crossing 26 of the railway track 7 with a street 27 for cars 28, a sensor 24 for sensing the status of a barrier 29 securing the crossing 26, a sensor for sensing the status of a railway switch along the track 7, or the like.

In the embodiment of Fig. 5, the mobile stations 8ᵢ are configured to receive respective sensor information Iᵢ from the sensors 21 - 24 connected thereto and to wirelessly communicate the sensor information Iᵢ in one of the wireless communications Cᵢ to the base station 5. The sensor information Iᵢ gathered by the base station 5 along the way of the vehicle 3 is passed on via the core network 6 to the application 2 on the vehicle 3. The sensor information Iᵢ can also be sent via the intermediate network NET to the second application 4.

The invention is not restricted to the specific embodiments described in detail herein but encompasses all variants, combinations, and modifications thereof that fall within the scope of the appended claims.

## Claims

1. Method for determining the location of a vehicle, in particular a train on a track, **characterized by**:
mounting a base station (5) of a cellular mobile phone network and a core network (6) of the mobile phone network onto the vehicle (3),
mounting at least two mobile stations (8ᵢ) of the mobile phone network stationarily on the ground (9) at a predetermined distance (s) from each other, wherein the distance (s) between two adjacent mobile stations (8ᵢ) is less than a half, preferably less than a fourth, of a communication range (R) of the base station (5),
wherein, for each of at least two mobile stations (8ᵢ) within said communication range (R), a measure of time-of-flight (TAᵢ) of a wireless communication (Cᵢ) between the base station (5) and said mobile station (8ᵢ) is determined,
wherein the location (P) of the vehicle (3) is determined based on said measures (TAᵢ) and the locations of mounting (Pᵢ) of said at least two mobile stations (8ᵢ), and
wherein the determined location (P) is communicated via the core network (6) to a first application (2) on the vehicle (3) and/or via at least one of the mobile stations and an intermediate network (NET), which connects the mobile stations (8ᵢ) to a second application (4) remote from the vehicle (3), to said second application (4).

2. Method according to claim 1, wherein the vehicle (3) is a train on a track (7) and the mobile stations (8ᵢ) are stationarily mounted along the track (7).

3. Method according to claim 1 or 2, wherein each mobile station (8ᵢ) determines its measure of time-of-flight (TAᵢ) and wirelessly communicates this measure (TAᵢ) and information about its location of mounting (Pᵢ) to the base station (5).

4. Method according to claim 1 or 2, wherein each mobile station (8ᵢ) wirelessly communicates information about its location of mounting (Pᵢ) to the base station (5), and wherein the base station (5) determines the measures of time-of-flight (TAᵢ) for all of said at least two mobile stations (8ᵢ).

5. Method according to any one of the claims 1 to 4, wherein, when there are more than two, preferably more than three, mobile stations (8ᵢ) within the communication range (R) of the base station (5), the measure (Taᵢ) and location information (Pᵢ) of at least one mobile station (8ᵢ) farthest from the base station (5) is disregarded when determining the location (P) of the vehicle (3).

6. Method according to any one of the claims 1 to 5, wherein said measure (TAᵢ) is a Timing Advance value according to a 2G, 3G, 4G or 5G standard.

7. Method according to any one of the claims 1 to 6, wherein at least one of the mobile stations (8ᵢ) receives sensor information (Iᵢ) from a sensor (21 - 24) connected thereto and wirelessly communicates said sensor information (Iᵢ) to the base station (5).

8. Method according to claims 2 and 7, wherein the sensor (23, 24) senses a status of a railway switch or railway crossing (27) along the track (7).

9. System for determining the location of a vehicle, in particular a train on a track, comprising:
a base station (5) of a cellular mobile phone network and a core network (6) of the mobile phone network, and
a location server (20) connected to the base station (5),
**characterized in that**
the base station (5) and the core network (6) are mounted on the vehicle (3), **in that**
the system further comprises at least two mobile stations (8ᵢ) of the mobile phone network mounted stationarily on the ground (9) at a predetermined distance (s) from each other, wherein the distance (s) between two adjacent mobile stations (8ᵢ) is less than a half, preferably less than a fourth, of a communication range (R) of the base station (5), and **in that**
the location server (20) has, for each of at least two mobile stations (8ᵢ) within said communication range (R), a measure of time-of-flight (TAᵢ) of a wireless communication (Cᵢ) between the base station (5) and said mobile station (8ᵢ),
wherein the location server (20) is configured to determine the location (P) of the vehicle (3) based on said measures (TAᵢ) and on information about the locations of mounting (Pᵢ) of said at least two mobile stations (8ᵢ), and
wherein the location server (20) is configured to communicate the determined location (P) via the core network (6) to a first application (2) on the vehicle (3) and/or via at least one of the mobile stations (8ᵢ) and an intermediate network (NET), which connects the mobile stations (8ᵢ) to a second application (4) remote from the vehicle (3), to said second application (4).

10. System according to claim 9, wherein the vehicle (3) is a train on a track (7) and the mobile stations (8ᵢ) are stationarily mounted along the track (7).

11. System according to claim 9 or 10, wherein each mobile station (8ᵢ) is configured to determine its measure of time-of-flight (TAᵢ) and wirelessly communicate this measure (TAᵢ) and information about its location of mounting (Pᵢ) to the base station (5).

12. System according to claim 9 or 10, wherein each mobile station (8ᵢ) is configured to wirelessly communicate information about its location of mounting (Pᵢ) to the base station (5), and wherein the base station (5) is configured to determine the measures of time-of-flight (TAᵢ) for all of said at least two mobile stations (8ᵢ).

13. System according to any one of the claims 9 to 12, wherein the location server (20) is configured to, when there are more than two, preferably more than three, mobile stations (8ᵢ) within the communication range (R) of the base station (5) and when it determines the location (P), disregard the measure (TAᵢ) and location information (Pᵢ) of at least one mobile station (8ᵢ) farthest from the base station (5).

14. System according to any one of the claims 9 to 13, wherein at least one of the mobile stations (8ᵢ) has a sensor (21 - 24) connected thereto and is configured to receive sensor information (Iᵢ) from that sensor (21 - 24) and to wirelessly communicate said sensor information (Iᵢ) to the base station (5) .

15. System according to claims 10 and 14, wherein the sensor (23, 24) senses a status of a railway switch or railway crossing (27) along the track (7).

## Patentansprüche

1. Verfahren zum Ermitteln des Ortes eines Fahrzeugs, insbesondere eines Zuges auf einer Strecke, **gekennzeichnet durch**:
Montieren einer Basisstation (5) eines zellularen Mobilfunknetzes und eines Kernnetzes (6) des Mobilfunknetzes auf dem Fahrzeug (3),
Montieren zumindest zweier Mobilstationen (8ᵢ) des Mobilfunknetzes stationär am Boden (9) in einem vorgegebenen Abstand (s) voneinander, wobei der Abstand (s) zwischen zwei benachbarten Mobilstationen (8ᵢ) kleiner als die Hälfte, bevorzugt kleiner als ein Viertel, einer Kommunikationsreichweite (R) der Basisstation (5) ist,
wobei für jede der zumindest zwei Mobilstationen (8ᵢ) innerhalb dieser Kommunikationsreichweite (R) ein Maß der Laufzeit (TAᵢ) einer drahtlosen Kommunikation (Cᵢ) zwischen der Basisstation (5) und dieser Mobilstation (8ᵢ) ermittelt wird,
wobei der Ort (P) des Fahrzeugs (3) auf Grundlage dieser Maße (TAᵢ) und der Montageorte (Pᵢ) der zumindest zwei Mobilstationen (8ᵢ) ermittelt wird, und
wobei der ermittelte Ort (P) über das Kernnetz (6) an eine erste Anwendung (2) auf dem Fahrzeug (3) und/oder über zumindest eine der Mobilstationen und ein intermediäres Netz (NET), welches die Mobilstationen (8ᵢ) mit einer zweiten Anwendung (4) fern vom Fahrzeug (3) verbindet, an diese zweite Anwendung (4) kommuniziert wird.

2. Verfahren nach Anspruch 1, wobei das Fahrzeug (3) ein Zug auf einer Strecke (7) ist und die Mobilstationen (8ᵢ) stationär entlang der Strecke (7) montiert sind.

3. Verfahren nach Anspruch 1 oder 2, wobei jede Mobilstation (8ᵢ) ihr Laufzeitmaß (TAᵢ) ermittelt und dieses Maß (TAᵢ) und Information über ihren Montageort (Pᵢ) drahtlos an die Basisstation (5) kommuniziert.

4. Verfahren nach Anspruch 1 oder 2, wobei jede Mobilstation (8ᵢ) Information über ihren Montageort (Pᵢ) drahtlos an die Basisstation (5) kommuniziert, und wobei die Basisstation (5) die Laufzeitmaße (TAᵢ) für alle der genannten zumindest zwei Mobilstationen (8ᵢ) ermittelt.

5. Verfahren nach einem der Ansprüche 1 bis 4, wobei, wenn sich mehr als zwei, bevorzugt mehr als drei, Mobilstationen (8ᵢ) innerhalb der Kommunikationsreichweite (R) der Basisstation (5) befinden, das Maß (TAᵢ) und die Ortsinformation (Pᵢ) zumindest einer von der Basisstation (5) am weitesten entfernten Mobilstation (8ᵢ) beim Ermitteln des Orts (P) des Fahrzeugs (3) nicht berücksichtigt werden.

6. Verfahren nach einem der Ansprüche 1 bis 5, wobei die genannte Maße (TAᵢ) ein Timing-Advance-Wert gemäß einem 2G-, 3G-, 4G- oder 5G-Standard sind.

7. Verfahren nach einem der Ansprüche 1 bis 6, wobei zumindest eine der Basisstationen (8ᵢ) von einem damit verbundenen Sensor (21 - 24) Sensorinformation (Iᵢ) empfängt und diese Sensorinformation (Iᵢ) drahtlos an die Basisstation (5) kommuniziert.

8. Verfahren nach den Ansprüchen 2 und 7, wobei der Sensor (23, 24) den Zustand einer Eisenbahnweiche oder einer Eisenbahnkreuzung (27) entlang der Strecke (7) erfasst.

9. System zum Ermitteln des Orts eines Fahrzeugs, insbesondere eines Zuges auf einer Strecke, umfassend:
eine Basisstation (5) eines zellularen Mobilfunknetzes und ein Kernnetz (6) des Mobilfunknetzes, und
ein Lokalisierungsserver (20), der mit der Basisstation (5) verbunden ist,
**dadurch gekennzeichnet,**
**dass** die Basisstation (5) und das Kernnetz (6) auf dem Fahrzeug (3) montiert sind, und
**dass** das System ferner zumindest zwei Mobilstationen (8ᵢ) des Mobilfunknetzes umfasst, die stationär in einem vorgegebene Abstand (s) voneinander am Boden (9) montiert sind, wobei der Abstand (s) zwischen zwei benachbarten Mobilstationen (8ᵢ) kleiner als die Hälfte, bevorzugt kleiner als ein Viertel, einer Kommunikationsreichweite (R) der Basisstation (5) ist, und
**dass** der Lokalisierungsserver (20) für jede der zumindest zwei Mobilstationen (8ᵢ) innerhalb dieser Kommunikationsreichweite (R) ein Maß der Laufzeit (TAᵢ) einer drahtlosen Kommunikation (Cᵢ) zwischen der Basisstation (5) und dieser Mobilstation (8ᵢ) hat,
wobei der Lokalisierungsserver (20) dazu ausgebildet ist, den Ort (P) des Fahrzeugs (3) auf Grundlage dieser Maße (TAᵢ) und von Information über die Montageorte (Pᵢ) der genannten zumindest zwei Mobilstationen (8ᵢ) zu ermitteln, und
wobei der Lokalisierungsserver (20) dazu ausgebildet ist, den ermittelten Standort (P) über das Kernnetz (6) an eine erste Anwendung (2) auf dem Fahrzeug (3) und/oder über zumindest eine der Mobilstationen (8ᵢ) und ein intermediäres Netz (NET), welches die Mobilstationen (8ᵢ) mit einer zweiten Anwendung (4) fern vom Fahrzeug (3) verbindet, an diese zweite Anwendung (4) zu kommunizieren.

10. System nach Anspruch 9, wobei das Fahrzeug (3) ein Zug auf einer Strecke (7) ist und die Mobilstationen (8i) stationär entlang der Strecke (7) montiert sind.

11. System nach Anspruch 9 oder 10, wobei jede Mobilstation (8ᵢ) dazu ausgebildet ist, ihr Laufzeitmaß (TAᵢ) zu ermitteln und dieses Maß (TAᵢ) und Information über ihren Montageort (Pᵢ) drahtlos an die Basisstation (5) zu kommunizieren.

12. System nach Anspruch 9 oder 10, wobei jede Mobilstation (8ᵢ) dazu ausgebildet ist, Information über ihren Montageort (Pᵢ) drahtlos an die Basisstation (5) zu kommunizieren, und wobei die Basisstation (5) dazu ausgebildet ist, die Laufzeitmaße (TAᵢ) für alle der genannten zumindest zwei Mobilstationen (8ᵢ) zu ermitteln.

13. System nach einem der Ansprüche 9 bis 12, wobei der Lokalisierungsserver (20) dazu ausgebildet ist, wenn sich mehr als zwei, bevorzugt mehr als drei, Mobilstationen (8ᵢ) innerhalb der Kommunikationsreichweite (R) der Basisstation (5) befinden und wenn er den Ort (P) ermittelt, das Maß (TAᵢ) und die Ortsinformation (Pᵢ) zumindest einer von der Basisstation (5) am weitesten entfernten Mobilstation (8ᵢ) nicht zu berücksichtigen.

14. System nach einem der Ansprüche 9 bis 13, wobei zumindest eine der Mobilstationen (8ᵢ) einen damit verbunden Sensor (21 - 24) hat und dazu ausgebildet ist, Sensorinformation (Iᵢ) von diesem Sensor (21 - 24) zu empfangen und diese Sensorinformation (Iᵢ) drahtlos an die Basisstation (5) zu kommunizieren.

15. System nach den Ansprüchen 10 und 14, wobei der Sensor (23, 24) einen Zustand einer Eisenbahnweiche oder einer Eisenbahnkreuzung (27) entlang der Strecke (7) erfasst.

## Revendications

1. Procédé de détermination de l'emplacement d'un véhicule, en particulier d'un train sur une voie, **caractérisé par** :
le montage d'une station de base (5) d'un réseau téléphonique mobile cellulaire et d'un réseau central (6) du réseau téléphonique mobile sur le véhicule (3),
le montage d'au moins deux stations mobiles (8ᵢ) du réseau téléphonique mobile de manière stationnaire sur le sol (9) à une distance (s) prédéterminée l'une de l'autre, où la distance (s) entre deux stations mobiles (8ᵢ) adjacentes est inférieure à une moitié, de préférence inférieure à un quart, d'une portée de communication (R) de la station de base (5),
dans lequel, pour chacune d'au moins deux stations mobiles (8ᵢ) dans ladite portée de communication (R), une mesure d'un temps de vol (TAᵢ) d'une communication sans fil (Cᵢ) entre la station de base (5) et ladite station mobile (8ᵢ) est déterminée,
dans lequel l'emplacement (P) du véhicule (3) est déterminé sur la base desdites mesures (TAᵢ) et des emplacements de montage (Pᵢ) desdites au moins deux stations mobiles (8ᵢ), et
dans lequel l'emplacement (P) déterminé est communiqué par le biais du réseau central (6) à une première application (2) sur le véhicule (3), et/ou par le biais d'au moins une des stations mobiles et d'un réseau intermédiaire (NET), qui relie les stations mobiles (8ᵢ) à une deuxième application (4) distante du véhicule (3), à ladite deuxième application (4).

2. Procédé selon la revendication 1, dans lequel le véhicule (3) est un train sur une voie (7) et les stations mobiles (8ᵢ) sont montées de manière stationnaire le long de la voie (7).

3. Procédé selon la revendication 1 ou 2, dans lequel chaque station mobile (8ᵢ) détermine sa mesure de temps de vol (TAᵢ) et communique sans fil cette mesure (TAᵢ) et l'information concernant son emplacement de montage (Pᵢ) à la station de base (5).

4. Procédé selon la revendication 1 ou 2, dans lequel chaque station mobile (8ᵢ) communique sans fil une information concernant son emplacement de montage (Pᵢ) à la station de base (5), et dans lequel la station de base (5) détermine les mesures du temps de vol (TAᵢ) pour toutes les dites au moins deux stations mobiles (8ᵢ).

5. Procédé selon l'une quelconque des revendications 1 à 4, dans lequel, lorsqu'il y a plus de deux, de préférence plus de trois, stations mobiles (8ᵢ) dans la portée de communication (R) de la station de base (5), la mesure (TAᵢ) et l'information d'emplacement (Pᵢ) d'au moins une station mobile (8ᵢ) la plus éloignée de la station de base (5) sont négligées lors de la détermination de l'emplacement (P) du véhicule (3).

6. Procédé selon l'une quelconque des revendications 1 à 5, dans lequel ladite mesure (TAᵢ) est une valeur Timing Advance selon une norme 2G, 3G, 4G ou 5G.

7. Procédé selon l'une quelconque des revendications 1 à 6, dans lequel au moins une des stations mobiles (8ᵢ) reçoit une information de capteur (Iᵢ) à partir d'un capteur (21 - 24) y étant relié et communique sans fil ladite information de capteur (Iᵢ) à la station de base (5).

8. Procédé selon des revendications 2 et 7, dans lequel le capteur (23, 24) détecte un état d'un aiguillage ferroviaire ou d'un passage à niveau (27) le long de la voie (7).

9. Système de détermination de l'emplacement d'un véhicule, en particulier d'un train sur une voie, comprenant :
une station de base (5) d'un réseau téléphonique mobile cellulaire et un réseau central (6) du réseau téléphonique mobile, et
un serveur de localisation (20) relié à la station de base (5), **caractérisé en ce que**
la station de base (5) et le réseau central (6) sont montés sur le véhicule (3), et **en ce que**
le système comprend en outre au moins deux stations mobiles (8ᵢ) du réseau téléphonique mobile montées de manière stationnaire sur le sol (9) à une distance (s) prédéterminée l'une de l'autre, où la distance (s) entre deux stations mobiles (8ᵢ) adjacentes est inférieure à une moitié, de préférence est inférieure à un quart, d'une portée de communication (R) de la station de base (5), et **en ce que**
le serveur de localisation (20) possède, pour chacune d'au moins deux stations mobiles (8ᵢ) dans ladite portée de communication (R), une mesure d'un temps de vol (TAᵢ) d'une communication sans fil (Cᵢ) entre la station de base (5) et ladite station mobile (8ᵢ),
dans lequel le serveur de localisation (20) est conçu pour déterminer l'emplacement (P) du véhicule (3) sur la base desdites mesures (TAᵢ) et d'une information concernant les emplacements de montage (Pᵢ) desdites au moins deux stations mobiles (8ᵢ), et
dans lequel le serveur de localisation (20) est conçu pour communiquer l'emplacement (P) déterminé par le biais du réseau central (6) à une première application (2) sur le véhicule (3), et/ou par le biais d'au moins une des stations mobiles (8ᵢ) et d'un réseau intermédiaire (NET), qui relie les stations mobiles (8ᵢ) à une deuxième application (4) distante du véhicule (3), à ladite deuxième application (4).

10. Système selon la revendication 9, dans lequel le véhicule (3) est un train sur une voie (7) et les stations mobiles (8ᵢ) sont montées de manière stationnaire le long de la voie (7).

11. Système selon la revendication 9 ou 10, dans lequel chaque station mobile (8ᵢ) est conçue pour déterminer sa mesure de temps de vol (TAᵢ) et communiquer sans fil cette mesure (TAᵢ) et une information concernant son emplacement de montage (Pᵢ) à la station de base (5) .

12. Système selon la revendication 9 ou 10, dans lequel chaque station mobile (8ᵢ) est conçue pour communiquer sans fil une information concernant sont emplacement de montage (Pᵢ) à la station de base (5), et dans lequel la station de base (5) est conçue pour déterminer les mesures de temps de vol (TAᵢ) pour toutes lesdites au moins deux stations mobiles (8ᵢ).

13. Système selon l'une quelconque des revendications 9 à 12, dans lequel le serveur de localisation (20) est conçu pour, lorsqu'il y a plus de deux, de préférence plus de trois, stations mobiles (8ᵢ) dans la portée de communication (R) de la station de base (5) et lorsqu'il détermine l'emplacement (P), négliger la mesure (TAᵢ) et l'information d'emplacement (Pᵢ) d'au moins une station mobile (8ᵢ) la plus éloignée de la station de base (5).

14. Système selon l'une quelconque des revendications 9 à 13, dans lequel au moins une des stations mobiles (8ᵢ) a un capteur (21 à 24) y étant relié et est conçue pour recevoir une information de capteur (Iᵢ) à partir de ce capteur (21 à 24) et pour communiquer sans fil ladite information de capteur (Iᵢ) à la station de base (5).

15. Système selon des revendications 10 et 14, dans lequel le capteur (23, 24) détecte un état d'un aiguillage ferroviaire ou d'un passage à niveau (27) le long de la voie (7).
